Europäisches Patentamt

European Patent Office

Office européen des brevets

(11) Veröffentlichungsnummer: **0 224 192 B1**

# EUROPÄISCHE PATENTSCHRIFT

(45) Veröffentlichungstag der Patentschrift: **29.04.92**

(51) Int. Cl.5: **C09D** **125/14**, C08L 25/14

(21) Anmeldenummer: **86116039.8**

(22) Anmeldetag: **20.11.86**

(54) **Verfahren zur Herstellung von wasserverdünnbaren Lackbindemitteln für verformbare Lackierungen.**

(30) Priorität: **27.11.85 AT 3453/85**

(43) Veröffentlichungstag der Anmeldung:
**03.06.87 Patentblatt 87/23**

(45) Bekanntmachung des Hinweises auf die
Patenterteilung:
**29.04.92 Patentblatt 92/18**

(84) Benannte Vertragsstaaten:
**BE CH DE ES FR GB IT LI NL SE**

(56) Entgegenhaltungen:
**EP-A- 0 069 936**

(73) Patentinhaber: **Vianova Kunstharz Aktiengesellschaft**

**A-8402 Werndorf(AT)**

(72) Erfinder: **Hiden, Hans**
**Corneliusweg 18**
**A-8042 Graz(AT)**
Erfinder: **Tümmler, Peter, Dr.**
**Grillparzerstrasse 6**
**A-8010 Graz(AT)**
Erfinder: **Tulacs, Lazslo, Dipl.-Ing.**
**Münzgrabengürtel 21**
**A-8010 Graz(AT)**
Erfinder: **Wenzl, Johann**

**A-8563 Ligist 11(AT)**

**Beschreibung**

Die Erfindung betrifft ein Verfahren zur Herstellung von wasserverdünnbaren Lackbindemitteln für verformbare Lackierungen auf der Basis von Vinylcopolymerisaten, wobei die Copolymerisation in Gegenwart von Celluloseestern, Epoxidharzen und speziellen Netzmitteln erfolgt.

In der Industrie aus Gründen der Rationalisierung und Energieersparnis immer mehr Verfahren zur großflächigen Beschichtung von Metallen nach dem Cancoating- oder Coilcoating-Verfahren den Eingang. Die nach vorhin genannten Verfahren beschichteten Metallplatten oder -bänder werden anschließend mit üblichen Druckfarben bedruckt und dann nochmals mit einem Klarlacküberzug aus einem anderen oder demselben Beschichtungsmaterial, zur Erzielung optisch einwandfreier Eigenschaften, beschichtet. Anschließend erfolgt die Verarbeitung dieser beschichteten Metallteile durch Verformung zu Behältern, wie z. B. Konservendosen für Lebensmittel oder Behälter für Getränke, wie beispielsweise für Bier, alkoholfreie Getränke mit und ohne Kohlensäure usw. Im allgemeinen erfolgt die Pasteurisierung (bei Getränken) oder Sterilisation (bei Lebensmitteln) nach dem Befüllen im Behälter.

Für den genannten Zweck müssen die Lackierungen einer Reihe von hohen Anforderungen entsprechen:

(1) Die Beschichtungen müssen eine ausgezeichnete Haftung auf Metallen wie Aluminium, Eisen und verzinntem Eisen aufweisen, da vorzugsweise keine Grundierung verwendet wird.

(2) Die erforderliche Härtungstemperatur soll möglichst niedrig sein, um die Verfärbung der Druckfarben zu vermeiden.

(3) Die Beschichtungen müssen eine Kombination von Flexibilität, Dehnbarkeit und Haftung aufweisen, die es ermöglicht, die beschichteten und gegebenenfalls bedruckten Substrate zu verformen, ohne daß, auch bei rascher Verformung, Risse oder andere Filmfehler an Biege-, Schneid- oder Falzstellen entstehen.

(4) Für den vorgesehenen Einsatz müssen die Beschichtungen die erforderliche Sterilisationsfestigkeit, auch nach einer Beanspruchung, wie sie durch die Verformung gegeben ist, aufweisen.

(5) Selbstverständlich müssen die Beschichtungen auch einwandfrei bedruckbar und überlackierbar sein.

Aus der EP-A2-00 69 936 ist ein Verfahren zur Herstellung stabiler Dispersionen von Celluloseestern in Wasser bekannt, welches dadurch gekennzeichnet ist, daß $\alpha$, $\beta$-ethylenisch ungesättigte Monomere in Gegenwart von Celluloseestern und wasserlöslichen Polyester- oder Acrylharzen polymerisiert werden. Die wasserlöslichen Harze dienen dabei als Emulgatoren. Die Bindemittel dienen zur Formulierung von Basislacken (base coats) für das 2-Schicht-Naß-in-Naß-Verfahren.

Es wurde nun gefunden, daß durch geeignete Auswahl der Komponenten und Verfahrensschritte Bindemittel erhalten werden können, welche die obengenannten Eigenschaften in günstiger Kombination aufweisen.

Die vorliegende Erfindung betrifft demgemäß ein Verfahren zur Herstellung von nach partieller oder vollständiger Neutralisation mit Basen wasserverdünnbaren Lackbindemitteln zur Erzielung hochverformbarer und sterilisationsfester Lackierungen auf der Basis von Vinylcopolymerisaten, Celluloseestern und Epoxidharzen, welches dadurch gekennzeichnet ist, daß man in einer Lösung in reaktionsinerten Lösemitteln von (bezogen auf Feststoff)

(A) 2 - 25 Gew.-%, vorzugsweise 5 - 20 Gew.-% eines Celluloseesters, vorzugsweise eines Celluloseacetobutyrats und

(B) 5 - 20 Gew.%, vorzugsweise 5 - 12 Gew.% einer Di- oder Polyepoxidverbindung, vorzugsweise eines Diglycidylethers eines 4,4′-(Bishydroxyphenyl) -alkans,

(C) 0,1 - 1 Gew.-% eines Netzmittels auf der Basis von Partialestern der Orthophosphorsäure, in Gegenwart eines Peroxid- und/oder Azo-Initiators und gegebenenfalls eines schwefelfreien Kettenübertragungsmittels, ein Copolymerisat (D), welches in der Gesamtkombination zu einem Anteil von 60 - 90 Gew.-%, vorzugsweise 70 - 85 Gew.-% vorliegt und aus einer Monomerenzusammensetzung von

(D1) 2 - 15 Gew.-% eines oder mehrerer Monomethylol-(meth)acrylamide, deren Methylolgruppen zu mindestens 95 % mit einem $C_1$ bis $C_8$-Monoalkohol verethert sind,

(D2) 2 - 50 Gew.-% einer oder mehrerer $\alpha$, $\beta$-ethylenisch ungesättigter Carbonsäuren,

(D3) 5 - 30 Gew.-% einer oder mehrerer vinylaromatischer Monomerer,

(D4) 30 - 70 Gew.-% Methyl- und/oder Ethylacrylat und

(D5) 1 - 8 Gew.-% eines oder mehrerer $C_2$ - $C_{16}$-Hydroxyalkylester der Acryl- oder Methacrylsäure aufweist, herstellt, wobei sowohl die Summe der Prozentzahlen der Komponenten A bis D, wid auch die Summe der Prozentzahlen der Monomeranteile D1 bis D5 jeweils 100 ergeben muß.

Die Erfindung betrifft darüberhinaus die Verwendung der nach dem erfindungsgemäßen Verfahren hergestellten Lackbindemittel zur Formulierung von Coil-coating-Lacken, insbesonders für die Beschichtung von Blechen für Dosen für die Lebensmittel- und Getränkeindustrie.

Die Lacke auf Basis der erfindungsgemäß hergestellten Bindemittel zeichnen sich insbesonders auch durch eine relativ niedrige Vernetzungstemperatur aus. Bereits bei Einbrenntemperaturen von ca. 160°C sind die aufgebrachten Filme voll vernetzt und weisen die gewünschten Eigenschaften im weitesten Umfang auf.

Als Komponente (A) werden Celluloseester eingesetzt. Vorzugsweise werden Celluloseacetobutyrate, wie sie im Handel üblich sind, eingesetzt, wobei besonders solche mit einem Acetylgruppengehalt von 2 - 13 % und einem Butyrylgruppengehalt von 37 - 53 % bevorzugt werden. Diese Komponente ist mit einem Anteil von 2 - 25 Gew.-% im Festkörperanteil der Bindemittelkombination enthalten. Vorzugsweise werden von dieser Komponente 5 bis 20 Gew.-% eingesetzt.

Die Komponente (B), mit einem Anteil von 5 bis 20 Gew.-%, vorzugsweise 5 bis 12 Gew.-% besteht, aus Di-oder Polyepoxidverbindungen. Solche Verbindungen sind in großer Zahl aus der Literatur bekannt. Die geeigneten Produkte dieser Art weisen ein Epoxidäquivalentgewicht nach DIN 53 188 zwischen etwa 400 und 4000 sowie einen Schmelzpunkt zwischen 40 und 120°C auf. Bevorzugte Rohstoffe dieser Art sind die Diglycidylether der 4,4′-(Bishydroxyphenyl)-alkane, insbesonders die des Bisphenol A.

Gemäß dem erfindungsgemäßen Verfahren werden die Komponenten (A) und (B) in einem geeigneten reaktioninerten Lösemittel, wie Glykolether, gelöst, wobei besonders die toxikologisch unbedenklichen Propylen- bzw. Dipropylenglykolether zum Einsatz gelangen.

Nach Zusatz der Komponente (C), nämlich 0,1 - 1 Gew.-% eines Netzmittels auf Basis eines partiellen Esters der Orthophosphorsäure, beispielsweise dem Ester des Nonylphenoltetraethylenglykolethers oder des Stearylalkoholoctapropylenglykolethers oder des Nonylphenoldiethylenglykolethers, wird diese Lösung als Polymerisationsmedium für die Komponente (D) verwendet.

Für die Herstellung dieser Komponente (D) werden die Monomeren, gegebenenfalls zusammen mit dem Kettenübertragungsmittel, sowie, vorteilhafterweise aus einem getreeten Zugabegefäß, der Polymerisationsinitiator innerhalb mehrerer Stunden kontinuierlich bei Rückflußtemperatur dem Polymerisationsmedium zugegeben. Die Monomerenmischung setzt sich aus folgenden Komponenten zusammen, wobei die Summe der Prozentzahlen 100 ergeben muß:

(D1) 2 - 15 Gew.-% eines oder mehrerer Monomethylol(meth)acrylamide, deren Methylolgruppen zu mindestens 95 % mit einem $C_1$-$C_8$-Monoalkanol verethert sind. Besonders geeignet sind die N-Butoxy-(meth)acrylamide und deren höhere Homologe, wie das N-2-Ethylhexyloxy(meth)acrylamid.

(D2) 5 - 20 Gew.-% einer oder mehrerer $\alpha$, $\beta$-ethylenisch ungesättigter Carbonsäuren, wie die (Meth)acrylsäure, Maleinsäure, Fumarsäure oder die Hydroxyalkylhalbester dieser Dicarbonsäuren.

(D3) Als vinylaromatische Monomere, welche in einer Menge von 5 - 30 Gew.-% eingesetzt werden, sind beispielsweise Styrol, Vinvltoluol oder $\alpha$-Methylstyrol zu nennen.

(D4) Diese Komponente besteht aus 30 bis 70 Gew.-% Methyl- und/oder Ethylacrylat.

(D5) Als weitere Komponente enthält die Mischung 1 - 8 Gew.-% an Hydroxyalkylestern der (Meth)acrylsäure, deren Alkylrest 2 - 10 C-Atome aufweist. Beispiele dafür sind Hydroxyethyl(meth)acrylat, 4-Hydroxybutylacrylat und Hydroxy-2-ethylhexylacrylat. Weitere einsetzbare Hydroxyestermonomere sind beispielsweise das 3-Hydroxybutylmaleinat oder das Tripropylenglykolmonomethacrylat.

Die Komponente (D) ist im Gesamtsystem mit einem Anteil von 60 bis 90 Gew.-% vertreten. Vorzugsweise werden von dieser Komponente 70 - 85 Gew.-% eingesetzt. Die Summe der Prozentzahlen für die Komponenten A bis D muß ebenfalls 100 ergeben. Als Polymerisationsinitiatoren werden bevorzugt Peroxide und/oder Azoverbindungen eingesetzt, deren Halbwertszeit von 1 Stunde bei Temperaturen zwischen 50 und 100°C liegt. Das sind beispielsweise Azoisobuttersäuredinitril, 2,2′-Azobis(2-methylbutyronitril), Dilaurylperoxid oder Dibenzoylperoxid.

Als Kettenübertragungsmittel (Regler), welche gegebenenfalls bei der Polymerisationsreaktion eingesetzt werden, werden für eine Verwendung des Bindemittels als Beschichtungsmittel für Lebens- und Genußmittelkonservendosen ausschließlich schwefelfreie Produkte eingesetzt. Vorteilhaft wird für diesen Zweck dimeres $\alpha$-Methylstyrol eingesetzt.

Die erfindungsgemäß hergestellten Bindemittel dienen besonders für Beschichtungen nach dem Coil-coating-Verfahren. Aufgrund der Eigenschaften der Beschichtung können die Bleche zur Herstellung von Dosen und ähnlichen Behältern, welche zur Aufnahme von Lebensmitteln oder Getränken dienen, verwendet werden, wobei die aufgebrachten Beschichtungen die Außenbeschichtung darstellen, welche nach dem Bedrucken mit einer weiteren Klarlackschicht, gegebenenfalls auf Basis des gleichen Bindemittels, überzogen wird.

Die Formulierung solcher Lacke ist dem Fachmann ebenso bekannt, wie deren Applikation bzw. die Auswahl der geeigneten Substrate.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1: In einem mit Rührer, Thermometer, Zugabegefäßen und Rückflußkühler ausgestatteten Reaktionsgefäß werden 50 Tle Methoxypropanol und 0,3 Tle Phosphorsäurenonylphenoltetraethylenglykoletherester auf 70°C erwärmt. Nach Zugabe von 12 Tlen eines Diepoxidharzes auf Basis von Bisphenol A mit einem Epoxidäquivalentgewicht von 450 - 825 (nach DIN 53 188) und einem Schmelzpunkt von 45 - 55°C (nach DIN 53 736), sowie 5 Tlen eines Celluloseacetobutyrats mit einem Acetylgruppengehalt von 2 % und einem Butyrylgruppengehalt von 53 % wird die Temperatur auf 112°C gesteigert. Zu der nun klaren und homogenen Lösung wird bei 112 - 115°C innerhalb von 5 Stunden eine Mischung aus

| | |
|---|---|
| 17,70 Tlen | N-Butoxymethylacrylamid (50%ig gelöst in Butanol) |
| 12,00 Tlen | Acrylsäure |
| 11,55 Tlen | Styrol |
| 60,60 Tlen | Ethylacrylat |
| 1,50 Tlen | Tripropylenglykolmonomethacrylat |
| 0,50 Tlen | 2-Hydroxyethylmethacrylat |
| 3,00 Tlen | 3-Hydroxybutylmaleinat |

sowie

| | |
|---|---|
| 3,00 Tlen | dimerem $\alpha$-Methylstyrol (als Regler) und |
| 2,00 Tlen | Azoisobuttersäuredinitril |

kontinuierlich zugegeben. Die Reaktionstemperatur wird weiter gehalten bis, gegebenenfalls nach weiteren Initiatorzugaben, ein Polymerisationsumsatz von praktisch 100 % erreicht ist.

Die Berechnung des Polymerisationsumsatzes erfolgt aus der Festkörpergehaltsbestimmung nach der Formel:

$$\text{Polymerisationsumsatz } (\%) = \left( \frac{a \times b}{100} - d \right) \times \frac{100}{c}$$

wobei

| | | |
|---|---|---|
| a | = | ermittelter Festkörpergehalt, % |
| b | = | Gesamtmasse im Reaktionsgefäß (g) |
| c | = | Monomerenanteil (g) |
| d | = | andere Feststoffkomponenten (Celluloseester und Epoxidverbindungen, g) |

bedeutet.

Nach Beendigung der Reaktion wird der Ansatz mit Methoxypropanol auf einen Festkörpergehalt von 60 % verdünnt. Das Bindemittel weist eine Säurezahl von 76 mg KOH/g (DIN 53 402) und eine Grenzviskositätszahl (CHCl$_3$/20°C) von 19,2 ml/g auf.

Beispiel 2: In einem wie in Beispiel 1 beschriebenen Reaktionsgefäß werden 50 Tle Methoxypropanol und 0,3 Tle Phosphorsäurenonylphenoltetraethylenglykoletherester auf 80°C erwärmt. Nach Zugabe von 10 Tlen eines Diepoxidharzes auf Basis von Bisphenol A mit einem Epoxidäquivalentgewicht von 1.500 - 2.000 (nach DIN 53 188) und einem Schmelzpunkt von 80 - 100°C (DIN 53 736), sowie 10 Tlen eines Celluloseacetobutyrats mit einem Acet;ylgruppengehalt von 13 % und einem Butyrylgruppengehalt von 37 % wird die Temperatur auf 115°C gesteigert. Zu der nun klaren und homogenen Lösung wird bei 113-116°C innerhalb von 5 Stunden eine Mischung aus

| | |
|---|---|
| 9,43 Tlen | N-Butoxymethylmethacrylamid (70%ig gelöst in Butanol) |
| 6,00 Tlen | Acrylsäure |
| 6,00 Tlen | Methacrylsäure |
| 1,00 Tl | 2-Hydroxyethylmethacrylat |
| 1,00 Tl | Tripropylenglykolmonomethacrylat |
| 63,00 Tlen | Ethylacrylat |
| 3,00 Tlen | 3-Hydroxybutylmaleinat |

| 13,40 Tlen | Styrol |
|---|---|

sowie

| 3,00 Tlen | dimeren $\alpha$-Methylstyrol (als Regler) und |
|---|---|
| 2,50 Tlen | 2,2-Azobis(2-methylbutyronitril) |

kontinuierlich zugegeben. Die Reaktionstemperatur wird weiter gehalten bis, gegebenenfalls nach weiteren Initiatorzugaben, ein Polymerisationsumsatz von praktisch 100 % erreicht ist.

Nach Beendigung der Reaktion wird der Ansatz mit Methoxypropanol auf einen Festkörpergehalt von 60 % verdünnt. Das Bindemittel weist eine Säurezahl von 71,4 mg KOH/g (DIN 53 402) und eine Grenzvixkositätszahl ($CHCl_3$/20°C) von 18,5 ml/g auf.

Beispiel 3: In einem wie im Beispiel 1 beschriebenen Reaktionsgefäß werden 58 Tle Methoxypropanol und 0,7 Tle Phosphorsäurenonylphenoltetraethylenglykoletherester auf 105°C erwärmt. Nach Zugabe von 6 Tlen eines Diepoxidharzes auf Basis von Bisphenol A mit einem Epoxidäquivalentgewicht von 2.400 - 4.000 (Nach DIN 53 188) und einem Schmelzpunkt von 100 - 150°C (DIN 53 736), sowie 18 Tle eines Celluloseacetobutyrates mit einem Acetylgruppengehalt von 5 % und einem Butyrylgruppengehalt von 49 % wird die Temperatur auf 110°C gesteigert. Zu der nun klaren und homogenen Lösung wird bei 110 - 114°C innerhalb von 6 Stunden eine Mischung aus

| 20,00 Tlen | N-Butoxymethylacrylamid (50%ig in Butanol) |
|---|---|
| 10,00 Tlen | Acrylsäure |
| 8,00 Tlen | Methacrylsäure |
| 10,50 Tlen | Methylacrylat |
| 46,50 Tlen | Ethylacrylat |
| 11,50 Tlen | para-Methylstyrol |
| 0,50 Tlen | 3-Hydroxybutylmaleinat |
| 1,50 Tlen | 2-Hydroxypropylmethacrylat |
| 1,50 Tlen | 2-Hydroxyethylacrylat |

sowie

| 4,2 Tlen | dimerem $\alpha$-Methylstyrol (als Regler) und |
|---|---|
| 2,50 Tlen | Dibenzoylperoxid (50%ig in Weichmacher) |

kontinuierlich zugegeben. Die Reaktionstemperatur wird weiter gehalten bis, gegebenenfalls nach weiteren Initiatornachgaben, ein Polymerisationsumsatz von praktisch 100 % erreicht ist. Nach Beendigung der Reaktion wird der Ansatz mit Methoxypropanol auf einen Festkörpergehalt von 60 % verdünnt. Das Bindemittel weist eine Säurezahl von 102,4 mg KOH/g (DIN 53 402) und eine Grenzviskositätszahl ($CHCl_3$/20°C) von 20,9 ml/g auf.

Die Bindemittelzusammensetzungen gemäß Beispiel 1 bis 3 wurden sowohl in einem pigmentierten Lack (A) als auch als Klarlack (B) geprüft.

## Herstellung und Applikation der Lacke

### LACK A (weißer Stanzlack)

100 Tle der 60%igen Harzlösung gemäß Beispiel wurden mit 12 Tlen Isopropanol und 12 Tlen Propylenglykolmonomethylether verdünnt und mit 6 Tlen Dimethylethanolamin partiell neutralisiert. Mit einem Teil dieser Lösung wurde mit 72,4 Tlen Titandioxid (Rutiltype) eine Farbpaste hergestellt, welche nach Auflacken mit dem restlichen Bindemittel und Einstellen des pH-Wertes auf 8,0 bis 8,5 mit Dimethylethanolamin (ca. 1,5 Tle) mit deionisiertem Wasser (ca. 100 Tle) auf Verarbeitungsviskosität verdünnt wurde.

Der Lack wurde in einer Schicht von ca. 8 bis 10 $g/m^2$ (Trockenfilm) auf Weißblech aufgetragen und jeweils 15 Minuten bei 160 und 180°C eingebrannt.

### LACK B (Silberlack)

100 Tle der 60%igen Harzlösung gemäß Beispiel wurden nach Zusatz von 0,2 Tlen eines für wäßrige Systeme geeigneten siliconhaltigen Netzmittels mit je 10 Tlen Isopropanol und Propylenglykolmomomethylether verdünnt. Nach Einstellung des pH-Wertes mit Dimethylethanolamin auf 8,0 bis 8,5 (ca. 7 Tle) wurde der Ansatz mit deionisiertem Wasser (ca. 110 Tle) verdünnt.

Der Lack wurde in einer Schicht von ca. 5 $g/m^2$ (Trockenfilm) auf Weißblech aufgebracht und jeweils 15 Minuten bei 160 und 180°C eingebrannt.

Ergebnisse der Lackprüfung

Die Bleche wurden 6 Stunden nach dem Einbrennen geprüft, wobei sowohl die bei 160°C als auch die bei 180 C° eingebrannten Filme praktisch die gleichen Ergebnisse erbrachten.

```
Prüfung              Methode                    Ergebnis

Haftung              DIN 53 151                  GT O

Schlagprüfung        GARDNER                    60-80 inch pound
                              entsprechend      6,79-9,06 Joule

Tiefziehfähigkeit    Näpfchenprobe              sehr gut
                     (ERICHSEN)

Sterilisations-      1 Std./121°C               sehr gut
fähigkeit            Wasserdampf

Haftung nach         DIN 53 151                 GT O - 1
Sterilisation

Überlackierbarkeit   Klarlack auf               sehr gut
                     Weißlack
```

**Patentansprüche**

**Patentansprüche für folgende Vertragsstaaten : BE, CH, DE, FR, GB, IT, NL, SE**

1.  Verfahren zur Herstellung von nach partieller oder vollständiger Neutralisation mit Basen wasserverdünnbaren Lackbindemitteln zur Erzielung hochverformbarer und sterilisationsfester Lackierungen auf der Basis von Vinylcopolymerisaten, Celluloseestern und Epoxidharzen, dadurch gekennzeichnet, daß man in einer Lösung in reaktionsinerten Lösemitteln von (bezogen auf Feststoff)
    (A) 2 - 25 Gew.-%, vorzugsweise 5 - 20 Gew.-% eines Celluloseesters, vorzugsweise eines Celluloseacetobutyrats und
    (B) 5 - 20 Gew.-%, vorzugsweise 5 - 12 Gew.-% einer Di- oder Polyepoxidverbindung, vorzugsweise eines Diglycidylethers eines 4,4'-(Bishydroxyphenyl) -alkans,
    (C) 0,1 - 1 Gew.-% eines Netzmittels auf der Basis von Partialestern der Orthophosphorsäure, in Gegenwart eines Peroxid- und/oder Azo-Initiators und gegebenenfalls eines schwefelfreien Kettenübertragungsmittels, ein Copolymerisat (D), welches in der Gesamtkombination zu einem Anteil von 60 - 90 Gew.-%, vorzugsweise 70 - 85 Gew.-% vorliegt und aus einer Monomerenzusammensetzung von
    (D1) 2 - 15 Gew.-% eines oder mehrerer Monomethylol(meth)acrylamide, deren Methylolgruppen zu mindestens 95 % mit einem $C_1$ bis $C_8$-Monoalkohol verethert sind.
    (D2) 2 - 50 Gew.-% einer oder mehrerer α,ß-ethylenisch ungesättigter Carbonsäuren,
    (D3) 5 - 30 Gew.-% einer oder mehrerer vinylaromatischer Monomerer,
    (D4) 30 - 70 Gew.-% Methyl- und/oder Ethylacrylat und
    (D5) 1 - 8 Gew.-% eines oder mehrerer $C_2$ -$C_{16}$-Hydroxyalkylester der Acryl- oder Methacrylsäure
    aufweist, herstellt, wobei sowohl die Summe der Prozentzahlen der Komponenten A bis D, wie auch die Summe der Prozentzahlen der Monomeranteile D1 bis D5 jeweils 100 ergeben muß.

2.  Verfahren nach Anspruch 1 , dadurch gekennzeichnet, daß als Celluloseester ein Celluloseacetobutyrat mit einem Acetylgruppengehalt von 2 bis 13 % eingesetzt wird.

3.  Verfahren nach den Ansprüchen 1 und 2, dadurch gekennzeichnet, daß als Kettenübertragungsmittel bei der Polymerisation dimeres α-Methylstyrol eingesetzt wird.

**4.** Lackbindemittel zur Formulierung von wasserverdünnbaren Coil-coating-Lacken, hergestellt nach dem Verfahren gemäß den Ansprüchen 1 bis 3.

**5.** Verwendung der nach den Ansprüchen 1 bis 3 hergestellten Lackbindemittel in wasserverdünnbaren Lacken für die Arnßenbeschichtung von Konservendosen.

**Patentansprüche für den Vertragsstaat: ES**

**1.** Verfahren zur Herstellung von nach partieller oder vollständiger Neutralisation mit Basen wasserverdünnbaren Lackbindemitteln zur Erzielung hochverformbarer und sterilisationsfester Lackierungen auf der Basis von Vinylcopolymerisaten, Celluloseestern und Epoxidharzen, dadurch gekennzeichnet, daß man in einer Lösung in reaktionsinerten Lösemitteln von (bezogen auf Feststoff)

(A) 2 - 25 Gew.-%, vorzugsweise 5 - 20 Gew.-% eines Celluloseesters, vorzugsweise eines Celluloseacetobutyrats und

(B) 5 - 20 Gew.-%, vorzugsweise 5 - 12 Gew.-% einer Di- oder Polyepoxidverbindung, vorzugsweise eines Diglycidylethers eines 4,4'-(Bishydroxyphenyl) -alkans,

(c) 0,1 - 1 Gew.-% eines Netzmittels auf der Basis von Partialestern der Orthophosphorsäure, in Gegenwart eines Peroxid- und/oder Azo-Initiators und gegebenenfalls eines schwefelfreien Kettenübertragungsmittels, ein Copolymerisat (D), welches in der Gesamtkombination zu einem Anteil von 60 - 90 Gew.-%, vorzugsweise 70 - 85 Gew.-% vorliegt und aus einer Monomerenzusammensetzung von

(D1) 2 - 15 Gew.-% eines oder mehrerer Monomethylol(meth)acrylamide, deren Methylolgruppen zu mindestens 95 % mit einem $C_1$ bis $C_8$-Monoalkohol verethert sind,

(D2) 2 - 50 Gew.-% einer oder mehrerer $\alpha,\beta$-ethylenisch ungesättigter Carbonsäuren,

(D3) 5 - 30 Gew.-% einer oder mehrerer vinylaromatischer Monomerer,

(D4) 30 - 70 Gew.-% Methyl- und/oder Ethylacrylat und

(D5) 1 - 8 Gew.-% eines oder mehrerer $C_2$ -$C_{16}$-Hydroxyalkylester der Acryl- oder Methacrylsäure aufweist, herstellt, wobei sowohl die Summe der Prozentzahlen der Komponenten A bis D, wie auch die Summe der Prozentzahlen der Monomeranteile D1 bis D5 jeweils 100 ergeben muß.

**2.** Verfahren nach Anspruch 1 , dadurch gekennzeichnet, daß als Celluloseester ein Celluloseacetobutyrat mit einem Acetylgruppengehalt von 2 bis 13 % eingesetzt wird.

**3.** Verfahren nach den Ansprüchen 1 und 2, dadurch gekennzeichnet, daß als Kettenübertragungsmittel bei der Polymerisation dimeres $\alpha-$Methylstyrol eingesetzt wird.

**4.** Verwendung der nach den Ansprüchen 1 bis 3 hergestellten Lackbindemittel in wasserverdünnbaren Lacken für die Außenbeschichtung von Konservendosen.

**Claims**

**Claims for the following Contracting States : BE, CH, DE, FR, GB, IT, NL, SE**

**1.** Process for the Preparation of paint binders which are water-dilutable after partial or complete neutralisation with bases, which can be used for obtaining coatings which are highly flexible and resistant to sterilisation and are based on vinyl copolymers, cellulose esters and epoxy resins, which process is characterised in that in a solution in inert solvents of (relative to the solid)

(A) 2 - 25% by weight, preferably 5 - 20% by weight, of a cellulose ester, preferably a cellulose acetobutyrate and

(B) 5 - 20% by weight, preferably 5 - 12% by weight of a di- or polyepoxy compound, preferably a diglycidyl ether of a 4,4'-bis(hydroxyphenyl)alkane,

(C) 0.1 - 1% by weight of a wetting agent based on partial esters of orthophosphoric acid, in the presence of a peroxide and/or azo initiator and, where appropriate, of a sulphur-free chain-transfer agent, a copolymer (D) is prepared which is present in the entire combination in an amount of 60 - 90% by weight, preferably 70 - 85% by weight and contains of a monomer composition of

(D1) 2 - 15% by weight of one or more monomethylol(meth)acrylamides, at least 95% of whose methylol groups are etherified with a $C_1$ to $C_8$ monoalcohol,

(D2) 2 - 50% by weight of one or more $\alpha,\beta$-ethylenically unsaturated carboxylic acids, (D3) 5 - 30% by weight of one or more vinylaromatic monomers,

(D4) 30 - 70% by weight of methyl acrylate and/or ethyl acrylate and

(D5) 1 - 8% by weight of one or more $C_2$-$C_{16}$-hydroxyalkyl esters of acrylic or methacrylic acid, it being necessary not only for the sum of the percentages of components A to D but also for the sum of the percentages of the monomer proportions D1 to D5 each to amount to 100.

2. Process according to Claim 1, characterised in that the cellulose ester used is a cellulose acetobutyrate having an acetyl group content of 2 to 13%.

3. Process according to Claims 1 and 2, characterised in that the chain-transfer agent used in the polymerisation is $\alpha$-methylstyrene dimer.

4. Paint binder for formulating water-dilutable coil coating paints prepared by the process according to Claims 1 to 3.

5. Use of the paint binders prepared according to Claims 1 to 3 in water-dilutable paints for the outer coating of tin cans.

**Claims for the following Contracting State : ES**

1. Process for the preparation of paint binders which are water-dilutable after partial or complete neutralisation with bases, which can be used far obtaining coatings which are highly flexible and resistant to sterilisation and are based on vinyl copolymers, cellulose esters and epoxy resins, which process is characterised in that in a solution in inert solvents of (relative to the solid)

(A) 2 - 25% by weight, preferably 5- 20% by weight, of a cellulose ester, preferably a cellulose acetobutyrate and

(B) 5 - 20% by weight, preferably 5 - 12% by weight of a di- or polyepoxy compound, preferably a diglycidyl ether of a 4,4'-bis(hydroxyphenyl)alkane,

(C) 0.1 - 1% by weight of a wetting agent based on partial esters of orthophosphoric acid, in the presence of a peroxide and/or azo initiator and, where appropriate, of a sulphur-free chain-transfer agent, a copolymer (D) is prepared which is present in the entire combination in an amount of 60 - 90% by weight, preferably 70 - 85% by weight and contains of a monomer composition of

(D1) 2 - 15% by weight of one or more monomethylol(meth)acrylamides, at least 95% of whose methylol groups are etherified with a $C_1$ to $C_8$ monoalcohol,

(D2) 2 - 50% by weight of one or more $\alpha,\beta$-ethylenicaily unsaturated carboxylic acids,

(D3) 5 - 30% by weight of one or more vinylaromatic monomers,

(D4) 30 - 70% by weight of methyl acrylate and/or ethyl acrylate and

(D5) 1 - 8% by weight of one or more $C_2$-$C_{16}$-hydroxyalkyl esters of acrylic or methacrylic acid, it being necessary not only for the sum of the percentages of components A to D but also for the sum of the percentages of the monomer proportions D1 to D5 each to amount to 100.

2. Process according to Claim 1, characterised in that the cellulose ester used is a cellulose acetobintyrate having an acetyl group content of 2 to 13%.

3. Process according to Claims 1 and 2, characterised in that the chain-transfer agent used in the polymerisation in $\alpha$-methylstyrene dimer.

4. Use of the paint binders prepared according to Claims 1 to 3 in water-dilutable paints for the outer coating of tin cans.

**Revendications**

**Revendications pour les Etats contractants suivants : BE, CH, DE, FR, GB, IT, NL, SE**

1. Procédé de préparation de liants pour laques diluables à l'eau après neutralisation partielle ou totale par des bases pour l'obtention de couches de laque hautement déformables et résistantes à la stérilisation à base de copolymères vinyliques, d'esters cellulosiques et de résines époxy, caractérisé en ce que, dans une solution dans des solvants inertes du point de vue réactionnel de (par rapport aux solides)

(A) 2 à 25% en poids, de préférence 5 à 20% en poids d'un ester cellulosique, de préférence d'un acétobutyrate de cellulose et

(B) 5 à 20% en poids, de préférence 5 à 12% en poids d'un composé di- ou polyépoxydique, de préférence d'un diglycidyléther d'un 4,4'-(bishydroxyphényl)alcane,

(C) 0,1 à 1% en poids d'un agent mouillant à base d'esters partiels de l'acide orthophosphorique, en présence d'un amorceur peroxydique et/ou azoïque et éventuellement d'un agent de transfert de chaîne exempt de soufre, on prépare un copolymère (D), qui est présent dans la combinaison globale en une fraction de 60 à 90% en poids, de préférence de 70 à 85% en poids, et qui présente une composition de monomères de

(D1) 2 à 15% en poids d'un ou plusieurs monométhylol(meth)acrylamides dont les groupes méthylol sont éthérifiés avec un mono-alcool en $C_1$ à $C_8$ à raison d'au moins 95%,

(D2) 2 à 50% en poids d'un ou plusieurs acides carboxyliques $\alpha,\beta$-éthyléniquement insaturés,

(D3) 5 à 30% en poids d'un ou plusieurs monomères vinylaromatiques,

(D4) 30 à 70% en poids d'acrylate de méthyle et/ou d'éthyle et

(D5) 1 à 8% en poids d'un ou plusieurs acrylates ou méthacrylates d'hydroxyalkyle en $C_2$ - $C_{16}$,

la somme des pourcentages des composants A à D, de même que la somme des pourcentages des fractions de monomères D1 à D5 devant être égales à chaque fois à 100.

2. Procédé selon la revendication 1, caractérisé en ce que l'on utilise, comme ester cellulosique, un acétobutyrate de cellulose avec une teneur en groupes acétyle de 2 à 13%.

3. Procédé selon les revendications 1 et 2, caractérisé en ce que l'on utilise, comme agent de transfert de chaîne au cours de la polymérisation, de l'$\alpha$-méthylstyrène dimère.

4. Liant pour laque pour la formulation de laques coil-coating diluables à l'eau, préparé selon le procédé selon les revendications 1 à 3.

5. Utilisation des liants pour laques préparés selon les revendications 1 à 3 dans des laques diluables à l'eau pour le revêtement externe de boîtes de conserve.

**Revendications pour I,Etat contractant suivant : ES**

1. Procédé de préparation de liants pour laques diluables à l'eau après neutralisation partielle ou totale par des bases pour l'obtention de couches de laque hautement déformables et résistantes à la stérilisation à base de copolymères vinyliques, d'esters cellulosiques et de résines époxy, caractérisé en ce que, dans une solution dans des solvants inertes du point de vue réactionnel de (par rapport aux solides)

(A) 2 à 25% en poids, de préférence 5 à 20% en poids d'un ester cellulosique, de préférence d'un acétobutyrate de cellulose et

(B) 5 à 20% en poids, de préférence 5 à 12% en poids d'un composé di- ou polyépoxydique, de préférence d'un diglycidyléther d'un 4,4'-(bishydroxyphényl)alcane,

(C) 0,1 à 1% en poids d'un agent mouillant à base d'esters partiels de l'acide orthophosphorique, en présence d'un amorceur peroxydique et/ou azoïque et éventuellement d'un agent de transfert de chaîne exempt de soufre, on prépare un copolymère (D), qui est présent dans la combinaison globale en une fraction de 60 à 90% en poids, de préférence de 70 à 85% en poids, et qui présente une composition de monomères de

(D1) 2 à 15% en poids d'un ou plusieurs monométhylol(meth)acrylamides dont les groupes méthylol sont éthérifiés avec un mono-alcool en $C_1$ à $C_8$ à raison d'au moins 95%,

(D2) 2 à 50% en poids d'un ou plusieurs acides carboxyliques $\alpha,\beta$-éthyléniquement insaturés,

(D3) 5 à 30% en poids d'un ou plusieurs monomères vinylaromatiques,

(D4) 30 à 70% en poids d'acrylate de méthyle et/ou d'éthyle et

9

(D5) 1 à 8% en poids d'un ou plusieurs acrylates ou méthacrylates d'hydroxyalkyle en $C_2$ - $C_{16}$, la somme des pourcentages des composants A à D, de même que la somme des pourcentages des fractions de monomères D1 à D5 devant être égales à chaque fois à 100.

2. Procédé selon la revendication 1, caractérisé en ce que l'on utilise, comme ester cellulosique, un acétobutyrate de cellulose avec une teneur en groupes acétyle de 2 à 13%.

3. Procédé selon les revendications 1 et 2, caractérisé en ce que l'on utilise, comme agent de transfert de chaîne au cours de la polymérisation, de l'$\alpha$-méthylstyrène dimère.

4. Utilisation des liants pour laques préparés selon les revendications 1 à 3 dans des laques diluables à l'eau pour le revêtement externe de boîtes de conserve.